# EUROPEAN PATENT APPLICATION

(11) **EP 2 161 873 A1**
(43) Date of publication of application: **10.03.2010**
(21) Application number: 08748646.0
(22) Date of filing: 22.05.2008
(51) Int. Cl.: H04L 9/16

(54) **METHOD, DEVICE AND SYSTEM FOR REALIZING A NEW GROUP MEMBER REGISTRATION IN THE MULTICAST KEY MANAGEMENT**

(30) Priority: 24.07.2007 CN 200710136336
(71) Applicant: Huawei Technologies Co., Ltd., Longgang District, Shenzhen Guangdong 518129 (CN)
(72) Inventor: LIU, Ya, Shenzhen, Guangdong 518129 (CN)
(74) Representative: Charles, Glyndwr
(86) International application number: PCT/CN2008/071040
(87) International publication number: WO 2009/012670

(57) **Abstract**

A method for registering a new member in group key management is disclosed. An agent is deployed on the local network that requires the automatic group key management service; the agent receives an original registration request message sent by a new member in the local network, encapsulates the original registration request message and an information indicating the new member into a request message, and sends the request message to a Group Controller Key Server (GCKS); and the agent receives a response message returned by the GCKS, extracts the information indicating the new member and the original response message carrying the processing result of request from the response message, and sends the original response message to the new member according to the information indicating the new member. Apparatuses and system for registering a new member in group key management are also disclosed. According to the present invention, a new member that joins a network can be registered automatically.

## Description

### Field of the Invention

The present invention relates to a group key management technology, and in particular, to a method, apparatus, and system for registering a new member in group key management.

### Background of the Invention

Internet Protocol Security (IPSEC) is a collective term of a series of security protocols, including key management and data security. It works at the IP layer in Point-to-Point (P2P) mode, and provides services such as authorization, authentication, key negotiation, key update, and data security. Open Shortest Path First version 3 (OSPFv3) is an intra-domain routing protocol. Request For Comments (RFC) 4552 is about how to ensure OSPFv3 security through IPSEC, and proposes to use a Group Security Association (GSA) to ensure the security for OSPFv3 running on a multicast network. The GSA lets routers on the network share the same group security algorithm and the same key; that is, the routers communicate with each other through OSPF and set up a route under the protection of the GSA.

However, RFC 4552 specifies only how to solve the problem of OSPFv3 security with the GSA, and proposes only a manual configuration mode rather than an automatic group key management mechanism. Dynamic update of a group key is a very important part of group key management. When the group key expires or is cracked, the old key needs to be replaced with a new key; that is, the router needs to obtain the updated GSA after the group key is updated. In this case, manual configuration is defective in low extensibility and low security, and is not suitable for scenarios with many multicast networks and routers.

Therefore, the OSPF and Routing Protocol Security Requirements (RPSEC) working groups put forward a group key management mechanism. The group key management mechanism is based on the Group Key Management (GKM) protocol formulated by the Multicast Security (MSEC) working group, and aims to enable the router to obtain the updated GSA automatically after the group key is updated dynamically, and replace the manual configuration mode.

The requirements for implementing OSPFv3 IPSEC group key management based on the GKM protocol of the MSEC are discussed in "draft-liu-ospfv3-automated-keying-req".

The group key management implemented through the GKM protocol of the MSEC is defective in that: The GKM protocol of the MSEC is based on the client-server model, and requires reachability between the client and the server; that is, a route between the client and the server needs to exist when the protocol runs. However, in the applying of OSPFv3 IPSEC, the route is set up by the OSPFv3 router. The process of setting up a route needs protection of the GKM protocol of the MSEC. The protection is provided by the GSA protocol in the Group Controller Key Server (GCKS). The router needs to download the GSA from the GCKS before setting up a route, but the router is unable to download the GSA from the GCKS before the route is set up, which is a contradiction.

Further, the transmission of the GSA needs security protection. Generally, the process of the router obtaining the GSA from the GCKS is included in the registration process of the GKM protocol of the MSEC. The first stage of registration is that: The router, which serves as a group member, requests the GCKS to perform authentication and key negotiation. The key refers to the key negotiated between the router, which ensures the GSA transmission security, and the GCKS. After successful authentication and key negotiation, the router sets up an authenticated encrypted channel with the GCKS. On the encrypted channel, various received messages are resolved using the key negotiated during the interaction between the router and the GCKS. The second stage of the registration is: Through the encrypted channel, the router requests to download the GSA from the GCKS and obtains the GSA. In either stage, the request message sent from the router to the GCKS may be called "original registration request message", and the response message that is returned by the GCKS and carries the processing result of the request is called "original response message". In different registration stages, different parameters and contents are carried in such messages. The router and the GCKS keep interacting through the original registration request message and the original response message repeatedly until the router obtains the GSA from the GCKS through the original response message, when the whole registration process is completed.

Considering the security of GSA transmission, to solve the problems in OSPFv3 IPSEC group key management implemented through the GKM protocol of the MSEC, the GCKS needs to be locally reachable; that is, the router needs to able to access the GCKS within one hop. In this way, the registration process can be performed to obtain the GSA. Therefore, three possible scenarios of deploying the GCKS are put forward in "draft-liu-ospfv3-automated-keying-req", as outlined as follows:
(1) A GCKS is deployed on each OSPFv3 multicast network that requires the automatic group key management service. This GCKS may be physical or logical; namely, the GCKS is an OSPFv3 router.

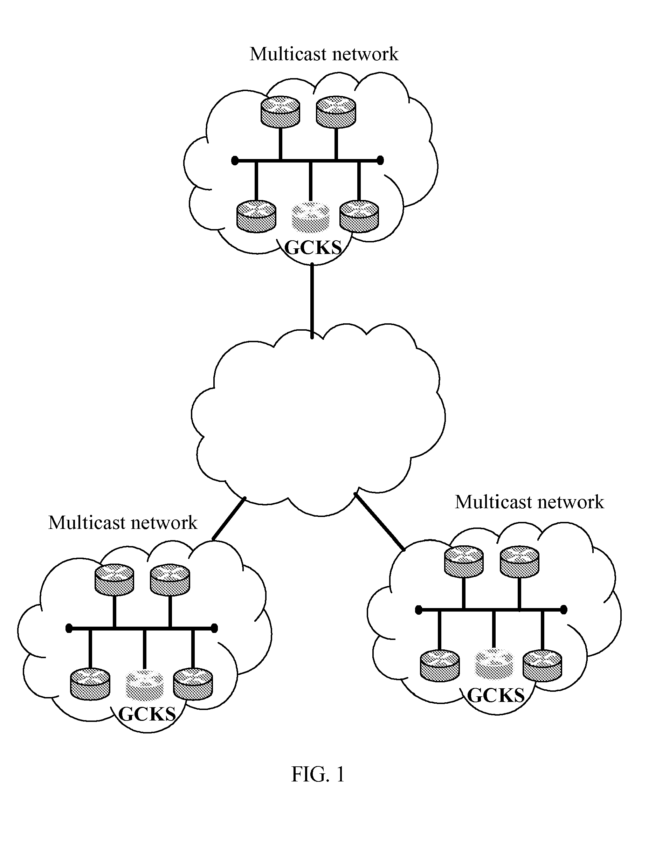

   FIG. 1 shows the network structure of this scenario. A GCKS is deployed on every multicast network. Therefore, every router in the multicast network may reach the GCKS in the network. However, this scenario is defective in that: It is difficult to implement centralized management such as group policy and member authorization for multiple decentralized GCKSs, and the management is costly; if all the deployed GCKSs are physical, the deployment is costly; it is difficult to protect the decentralized GCKSs in a centralized way, and a single GCKS is more vulnerable to crack.
(2) The GCKS is divided into two parts: Key Server (KS) and Group Controller (GC). A KS is deployed on every OSPFv3 multicast network that requires the automatic group key management service. This KS is logical. There is only one GC, which is deployed in a centralized way. The GC is responsible for formulating group policy and authorization information, and then distributing them to the KS. The KS is responsible for implementing the registration process with the router according to the group policy and the authorization information formulated by the GC so that the router can obtain the GSA.

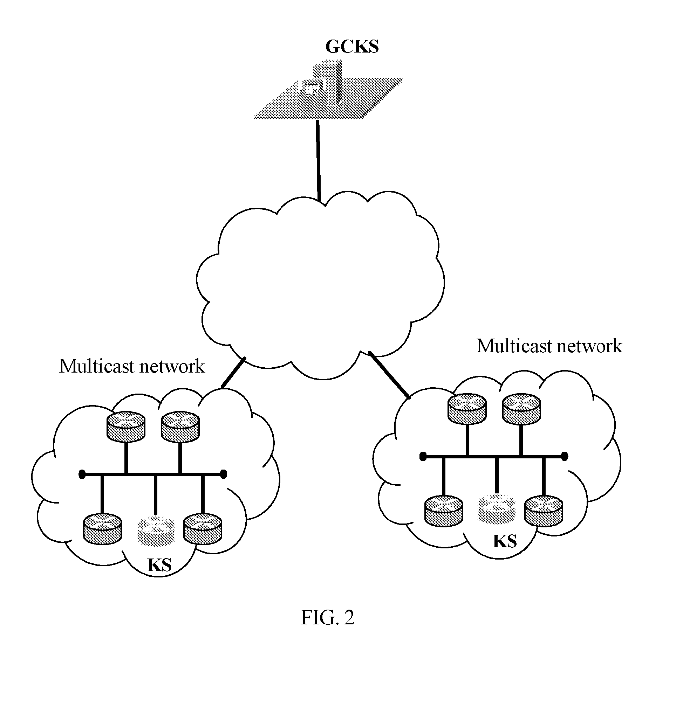

   FIG. 2 shows the network structure of this scenario. Similarly to the second scenario, the KS is responsible for to implementing the registration process with the router, and a KS is deployed on every multicast network. Therefore, the router in the multicast network can reach the KS in the local network. However, this deployment scenario is defective in that: The decentralized KSs may hardly be protected in a centralized way, and single KS is more vulnerable to crack; when registration between the member and the KS happens, only the public key authentication technology such as digital certificate is supported, and the password authentication mode is not supported, and therefore, the availability of this deployment scenario is reduced.
(3) An agent is deployed on every OSPFv3 multicast network that requires automatic group key management, and a GCKS is deployed remotely in a centralized way. The initial state of a network is configured manually; that is, an initial GSA is configured for the agent and the router on the multicast network. Subsequently, the agent and the router may use the initially configured GSA to set up a route to the GCKS respectively, and implement registration with the GCKS respectively through the route. After the group key is updated, through the route to the GCKS, the agent receives the message with GSA pushed by the GCKS deployed remotely in a centralized way, and then distributes the message with GSA to the router on the multicast network.

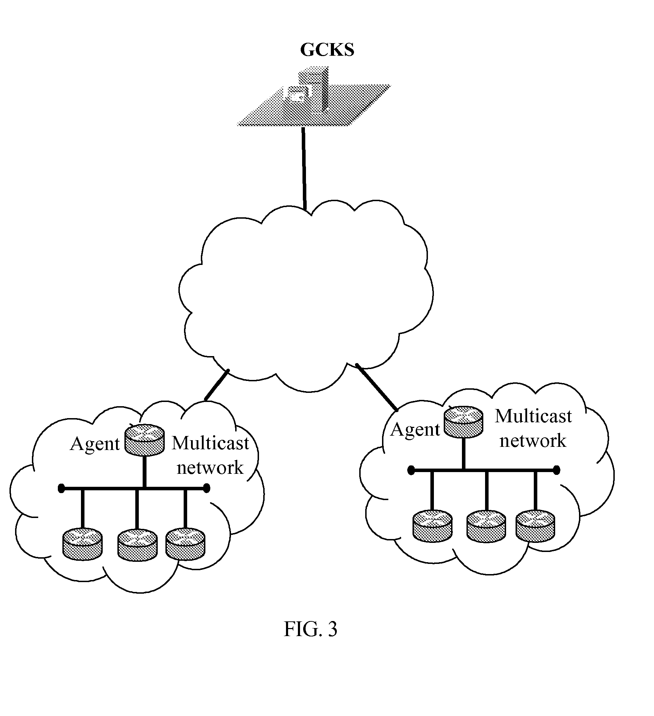

FIG. 3 shows the network structure of this deployment scenario. The merits of this scenario are: The GCKS is deployed in a centralized way, thus facilitating centralized management and protection. In comparison with the scenario of deploying a GCKS on every multicast network, the vulnerability to crack is low; the deployment is cost-efficient and the centralized GCKS can serve multiple OSPFv3 multicast networks simultaneously; the messages are forwarded through an agent, and therefore, the GCSK does not need to push the updated GSA to all members in the case that multicast is unavailable between networks, and the low extensibility is overcome.

The third scenario has advantages over the first scenario and the second scenario in terms of deployment and maintenance although the third scenario requires manual configuration for registering the agent and the router with the GCKS when the network is in the initial state. Moreover, in the case that the group key is updated dynamically, the third scenario relieves the load on the GCKS, thus facilitating the third deployment scenario. However, the third deployment scenario still fails to meet certain requirements. If the router, existing when the network is in the initial state, is called an old member and the router, joining dynamically after the network begins running, is called a new member, the new member who needs to join the OSPFv3 multicast network is unable to register with the GCKS for lack of routes, and is unable to access the GCKS or obtain the GSA. The process of setting up a route needs protection of the GSA, and no route can be set up without the GSA. In this case, once a new member joins, manual configuration is required for the new member to obtain the GSA and set up a route, thus bringing heavy workload of configuration.

In group key management, the problem exists not only when a new member needs to join in the foregoing OSPFv3 IPSEC scenario, but also in other scenarios; for example, the registration of the new member cannot be performed automatically if the new member is unable to identify the GCKS or obtain the location of the GCKS.

### Summary of the Invention

An embodiment of the present invention provides a method for registering a new member in group key management to automatically register a new member that needs to join.

An embodiment of the present invention provides an agent for registering a new member in group key management to automatically register a new member that needs to join.

An embodiment of the present invention provides a GCKS for registering a new member in group key management to automatically register a new member that needs to join.

An embodiment of the present invention provides a system for registering a new member in group key management to automatically register a new member that needs to join.

An embodiment of the present invention provides a method for registering a new member in group key management to deploy an agent on a local network that requires the automatic GKM service.

The agent receives an original registration request message sent by a new member in the local network, encapsulates the original registration request message and the information indicating the new member into a request message, and sends the request message to a GCKS.

The agent receives a response message returned by the GCKS, extracts the information indicating the new member and the original response message carrying the processing result of request from the response message, and sends the original response message to the new member according to the information indicating the new member.

An embodiment of the present invention provides an agent for registering a new member in group key management. The agent includes:
an encapsulating module, configured to receive an original registration request message sent by a new member in a local network, encapsulate the original registration request message and the information indicating the new member into a request message, and send the request message to a GCKS; and
a resolving module, configured to receive a response message returned by the GCKS, extract the information indicating the new member and the original response message carrying the processing result of request from the response message, and send the original response message to the new member according to the information indicating the new member.

An embodiment of the present invention provides a GCKS for registering a new member in group key management. The GCKS includes:
a message processing module, configured to receive a request message carrying information indicating the new member and an original registration request message from an agent, extract the information indicating the new member and the original registration request message, process the original registration request message and obtain a processing result of request; and
a message encapsulating module, configured to encapsulate the processing result of request obtained by the message processing module into an original response message, encapsulate the information indicating the new member extracted by the message processing module together with the original response message into a response message, and send the response message to the agent.

An embodiment of the present invention provides a system for registering a new member in group key management. The system includes:
a new member, configured to send an original registration request message to an agent in a local network, and receive an original response message carrying the processing result of request sent by the agent in the local network ;
the agent, configured to receive the original registration request message sent by the new member in the local network, encapsulate the original registration request message and the information indicating the new member into a request message, send the request message to a GCKS; receive a response message returned by the GCKS, extract the information indicating the new member and the original response message carrying the processing result of request from the response message, and send the original response message to the new member according to the information indicating the new member; and
the GCKS, configured to receive the request message carrying the information indicating the new member and the original registration request message from the agent, extract the information indicating the new member and the original registration request message, process the original registration request message and obtain a processing result of request; encapsulate the processing result of request into the original response message, encapsulate the information indicating the new member and the original response message into the response message, and send the response message to the agent.

In the method, apparatus and system for registering a new member in group key management in the embodiments of the present invention, an agent is deployed on the local network. The agent relays the original request message sent by the new member to the GCKS through the re-encapsulated request message, receives the response message from the GCKS, extracts the original response message carrying a processing result of request from the response message, relays the original response message sent by the GCKS to the new member, and helps the new member register with the GCKS, thus implementing automatic registration of the new member.

### Brief Description of the Drawings

FIG. 1 shows a network structure in a first deployment scenario of group key management in the prior art;
FIG. 2 shows a network structure in a second deployment scenario of group key management in the prior art;
FIG. 3 shows a network structure in a third deployment scenario of group key management in the prior art;
FIG. 4 is a flowchart of a method for registering a new member in group key management according to an embodiment of the present invention;
FIG. 5 shows a network structure of a method for registering a new member in group key management according to an embodiment of the present invention;
FIG. 6 shows a first structure of an agent for registering a new member in group key management according to an embodiment of the present invention;
FIG. 7 shows a second structure of an agent for registering a new member in group key management according to an embodiment of the present invention;
FIG. 8 shows a structure of a GCKS for registering a new member in group key management according to an embodiment of the present invention; and
FIG. 9 shows a structure of a system for registering a new member in group key management according to an embodiment of the present invention.

### Detailed Description of the Invention

To make the objectives and merits of the embodiment present invention clearer, the following describes the embodiments of the present invention in detail with reference to accompanying drawings.

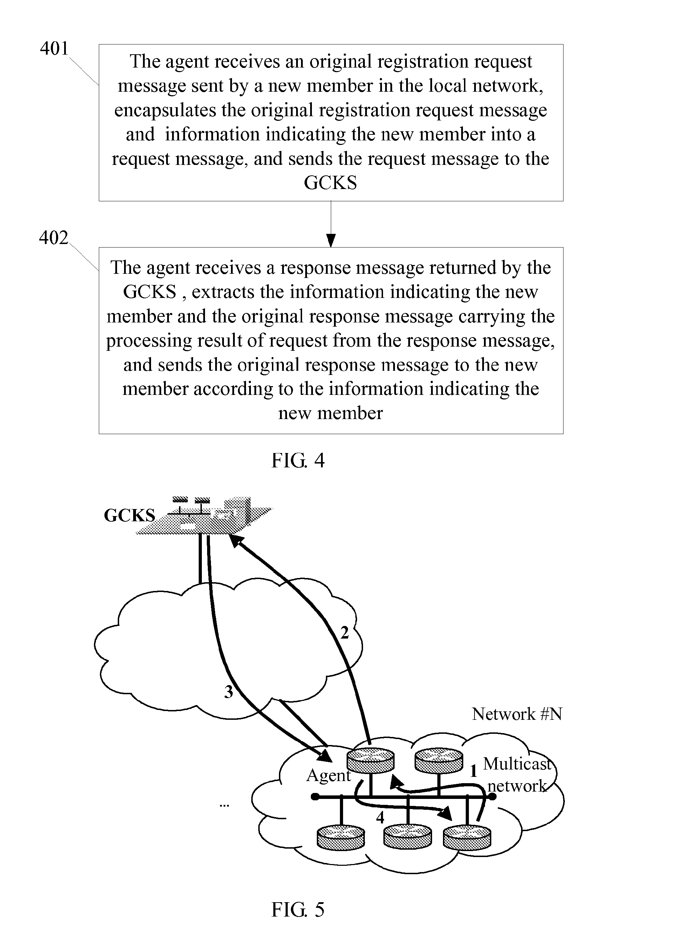

First, the method for registering a new member in group key management in an embodiment of the present invention is detailed below. FIG. 4 is a flowchart of this method.

An agent needs to be deployed beforehand on the local network that requires the automatic group key management service. The process shown in FIG. 4 includes:
Block 401: The agent receives an original registration request message sent by a new member in the local network, encapsulates the original registration request message and information indicating the new member into a request message, and sends the request message to the GCKS.
Block 402: The agent receives a response message returned by the GCKS, obtains the information indicating the new member and the original response message, which carries the processing result of the request, from the response message, and sends the original response message to the new member according to the information indicating the new member.
Blocks 401-402 are a process of registering a new member in group key management in an embodiment of the present invention. It is an automatic registration process when a new member joins a network after the network begins to run. In practice, blocks 401-402 are applied in each stage of the registration process.

The agent deployed on the local network may obtain the initial GSA through manual configuration or self-learning when the network is in the initial state, and set up a communication connection with the GCKS.

The local network may be a multicast network, a broadcast network or a unicast network.

Taking that the registration process of the GKM protocol of the MSEC includes two stages and the local network is a multicast network or a broadcast network for example. The first stage of registration is that the member requests the GCKS to perform authentication and key negotiation, and the second stage of registration is that the member requests to download the GSA from the GCKS and obtains the GSA. Therefore, blocks 401-402 may be applied to the foregoing two registration stages.

In the first stage of registration, the member requests the GCKS to perform authentication and key negotiation. In block 401, the agent receives the original registration request message sent by the new member that joins the multicast or broadcast network, which the agent belongs to. The parameters related to authentication and key negotiation may be carried in original registration request message. In the response message returned by the GCKS in block 402, the processing result of the request carried in the original response message is the authentication and key negotiation information. In the second stage of registration, the member requests to download the GSA from the GCKS and obtains the GSA. In block 401, the agent receives the original registration request message sent by the new member that joins the multicast network, which the agent belongs to. The parameters related to GSA downloading may be carried in the original registration request message. In the response message returned by the GCKS in block 402, the processing result of request carried in the original response message is the requested GSA.

The foregoing registration process of the GKM protocol of the MSEC takes two stages as an example, and illustrates only the basic blocks of interactions in each stage. Depending on the applied GKM protocol of the MSEC, the authentication mechanism and the interaction mode in different protocols, the interaction in each stage may include more than the two blocks enumerated above, but regardless of the blocks, the agent relays the messages communicated between the new member and the GCKS.

In the method for registering a new member in group key management in an embodiment of the present invention, an agent is deployed on the local network that requires the automatic group key management service. The agent relays the original registration request sent by the new member to the GCKS, receives the response message returned by the GCKS, relays the response message to the new member, and helps the new member register with the GCKS, thus reducing complicated configuration and implementing automatic registration of a new member.

In the method for registering a new member in group key management in an embodiment of the present invention, OSPFv3 IPSEC may be a specific application scenario; that is, the method for registering a new member in group key management in this embodiment may be a supplement to the third GCKS deployment scenario put forward in "draft-liu-ospfv3-automated-keying-req", thus implementing automatic registration of a new member.

The method for registering a new member in group key management in an embodiment of the present invention is universally applicable to other scenarios similar to OSPFv3 IPSEC. For example, when the GCKS is set to be "confidential", namely, when the new member is unable to identify the GCKS, the new member is unable to register with the GCKS. In this case, an agent may be deployed in the network, in which a new member dynamically joins, and the agent is responsible for relaying a request for registering of the new member to a server and relaying a response returned by the server to the new member. The agent implements automatic registration in place of the new member.

In blocks 401 and 402, the agent re-encapsulates the original registration request message sent by the new member so as to relay the original registration request message to the GCKS. The response message, returned by the GCKS and received by the agent, is generated by the GCKS by re-encapsulating the information indicating the new member and the original response message. The request message may be generated by adding a new message header outside the original registration request message, and the response message may be generated by adding a new message header outside the original response message. Supposing the message header of the original registration request message or the original response message is HDR and the new message header added to the encapsulated request message or response message is HDR', the format of the encapsulated request message or response message is shown in Table 1.

**Table 1**

| | | |
|---|---|---|
| HDR' | Information indicating new member | MSG {original registration request message/ original response message} |

The format of the information indicating new member and the original registration request message/response message may be "type-length-value", as shown in Table 2.

**Table 2**

| | | |
|---|---|---|
| Type | Length | Value |

The information indicating new member may be the source IP address of the new member. In this case, in block 401, before encapsulating the request message, the agent extracts the source IP address of the new member from the original registration request message; in block 402, the agent may send the extracted original response message to the source IP address according to the source IP address of the new member in the response message. Alternatively, the information indicating new member may be a local ID of the new member which is generated by the agent. In this case, in block 401, before encapsulating the request message, the agent extracts the source IP address of the new member from the original registration request message, generate a local ID of the new member corresponding to the source IP address, and store the corresponding relationship between the local ID of the new member and the source IP address of the new member. In block 402, the agent may extract the local ID of the new member from the response message, search for the source IP address of the new member corresponding to the local ID of the new member according to the corresponding relationship between the local ID and the source IP address of the new member, and send the extracted original response message to the source IP address.

In block 401, the agent receives the original registration request message sent by the new member on the local network. More particularly, the agent intercepts the original registration request message sent by the new member on the local network, for example, intercepts it on the multicast or broadcast network address and port, or intercepts it on the unicast network address and port. If blocks 401-402 are applied to the first stage of registration, for example, in a multicast or broadcast network, in block 401, the new member sends the original registration request message to the agent in the multicast or broadcast network for the first time. The new member may send the original registration request message in multicast or broadcast mode, and the agent may intercept the original registration request message sent by the new member on the specified multicast or broadcast address and port. If blocks 401-402 are applied to other stages of registration, namely, if the new member has sent the original registration request message to the agent in the multicast or broadcast network in the previous stage of registration, and has received the original response message sent by the agent, a preferred mode is applicable: The new member may use the unicast mode to send the original response message to the agent that has been used in the previous stage of registration. In this case, the new member may still use the multicast or broadcast mode to send the original registration request message.

When the agent intercepts the original registration request message sent by the new member on a unicast address and port, the agent may notify the new member of the unicast address and port through manual configuration or by providing the network configuration information for the new member. In this way, the new member may use the unicast mode to send the original registration request message to the unicast address and port, and the agent may intercept the original registration request message sent by the new member on this specified unicast address and port.

FIG. 5 shows the network structure in which the process shown in FIG. 4 is applied. Taking a multicast network for example; the multicast network is marked by "Network #N"; and the device on the upper left side of the multicast network is the deployed agent. The arrowhead marked by "1" and "2" corresponds to block 401, the arrowhead marked by "3" and "4" corresponds to block 402.

The GKM protocol of the MSEC is applied in different scenarios. The method for registering a new member in group key management in the OSPFv3 IPSEC application scenario is described below, taking the Group Domain of Interpretation (GDOI) in the GKM protocol of the MSEC as an example.

At the first stage of registration, namely, when the member requests the GCKS to perform authentication and key negotiation, the Internet Key Exchange version 1 (IKEv1 protocol is used; at the second stage of registration, namely, when the member requests to download the GSA from the GCKS and obtains the GSA, the protocol defined by the GDOI is used. Therefore, the blocks of interactions in the first stage and the second stage of registration are specified by the foregoing protocol. The message format in the first stage and the second stage of registration is shown in Table 1 and Table 2. The parameters carried in each message are specified in the protocol. The meanings of such parameters are well known to those skilled in the art, and are outlined below. In the following description, the information indicating new member is the local ID of the new member. The details about how the agent sends the original request message to the new member according to the local ID of the new member in this circumstance are not repeated described, since those have been given above.

The first stage of registration may include:

The agent receives the original registration request message sent by the new member through broadcast or multicast. The original request message may be denoted as: HDR, SA, KE, Ni, and Idii, where: SA represents the key policy supported by the new member; KE represents key negotiation; Ni represents randomicity; and Idii represents the ID of the new member. The original request message is used to initiate authentication and key negotiation.

The agent generates a "TAG", the local ID of the new member, encapsulates the local ID and the original registration request message into the request message, and sends the request message to the GCKS. The request message may be denoted as: HDR', TAG, and MSG {HDR, SA, KE, Ni, Idii}. The meanings of the parameters in the request message are the same as those in the original request message.

The agent receives the response message returned by the GCKS. The response message may be denoted as: HDR', TAG, and MSG {HDR, SA, KE, Nr, Idir, [CERT], SIG_R}, where: SA represents the key policy selected by the GCKS; KE represents key negotiation; Nr represents a random number selected by the GCKS; Idir represents the ID of the GCKS; [CERT] represents the certificate (namely, the public key); and SIG_R represents the signature of the GCKS for authenticating the identity of the GCKS.

The agent extracts the original response message from the response message, and sends the original response message to the new member through unicast according to the "TAG" in the response message. The extracted original response message is denoted as: HDR, SA, KE, Nr, Idir, [CERT], and SIG_R.

As specified in the protocol, the agent needs to receive the original registration request message for authenticating the identity of the new member, which is sent by the new member through broadcast or unicast. The original registration request message may be denoted as: HDR, [CERT], and SIG_I, where [CERT] is a certificate and SIG_I is the signature of the new member.

The agent encapsulates the original registration request message for authenticating the identity of the new member together with the "TAG", local ID of the new member, into the request message, and sends the request message to the GCKS. The request message may be denoted as: HDR', TAG, and MSG {HDR, [CERT], SIG_I}.

Described above are interactions in the first stage of registration, where the agent relays the original registration request message sent by the new member to the GCKS and relays the response message returned by the GCKS to the new member. Evidently, in the GDOI application scenario, the interaction process includes 1.5 blocks; in application scenarios other than the GDOI, the interaction process may include 2.5 blocks, depending on the protocol. However, the relay function of the agent between the new member and the GCKS remains unchanged.

If the method specified in the existing protocol is applied in the first stage of registration, the new member needs to communicate with the GCKS directly. The command parameters are the same as those in the embodiment of present invention, but no agent is involved, and every message is sent through unicast.

In the second stage of registration, the header of the original registration request message is set to HDR* to make it distinguished from the original registration request message in the first stage of registration. The second stage of registration may include:

The agent receives the original registration request message sent by the new member through broadcast or unicast. The original registration request message may be denoted as: HDR*, HASH(1), Ni, and ID, where HASH (1) represents key algorithm, and the meanings ofNi and ID are the same as those in the first stage of registration.

The agent generates a "TAG", the local ID of the new member, encapsulates the local ID and the original registration request message into the request message, and sends the request message to the GCKS. The request message may be denoted as: HDR', TAG, and MSG {HDR*, HASH(1), Ni, ID}.

The agent receives the response message returned by the GCKS. The response message may be denoted as: HDR', TAG, and MSG {HDR*, HASH(2), Nr, SA}.

The agent extracts the original response message from the response message, and sends the original response message to the new member through unicast according to the "TAG" in the response message. The original response message is denoted as: HDR*, HASH(2), Nr, and SA.

The agent receives the original registration request message sent by the new member through broadcast or unicast. The original registration request message may be denoted as: HDR*, HASH(3), [KE_I], [CERT], and [POP_I], where: HASH(3) is a new key algorithm after the new member considers the random number "Nr" obtained in the previous block; [KE_I] represents new key negotiation; and [POP_I] represents a certificate-based signature.

The agent encapsulates the original registration request message sent by the new member together with the "TAG", local ID of the new member into the request message, and sends the request message to the GCKS. The request message may be denoted as: HDR', TAG, MSG {HDR*, HASH(3), [KE_I], [CERT], and [POP_I]}.

The agent receives the response message sent by the GCKS. The response message may be denoted as: HDR', TAG, MSG {HDR*, HASH(4), [KE_R], [SEQ], KD, [CERT], and [POP_R]}, where the GSA required by the new member is carried in the KD , and [SEQ] is used for determining whether the new key is the same as the old key.

The agent extracts the original response message from the response message, and sends the original response message to the new member through unicast. The original response message includes: HDR*, HASH(4), [KE_R], [SEQ], KD, [CERT], and [POP_R].

Described above are interactions in the second stage of registration, where the agent relays the original registration request message sent by the new member to the GCKS and relays the response message returned by the GCKS to the new member. Those are the interactions in the GDOI application scenario specified in the protocol. In other application scenarios, the interaction process may include more or less blocks, depending on the protocol. However, the relay function of the agent between the new member and the GCKS remains unchanged.

If the method specified in the existing protocol is applied in the second stage of registration, the new member needs to communicate with the GCKS directly. The command parameters are the same as those in the embodiment of present invention, but no agent is involved, and every message is sent through unicast.

Secondly, the apparatus for registering a new member in group key management in an embodiment of the present invention is described below. The apparatus is either an agent or a GCKS, as detailed below.

The agent for registering a new member in group key management in this embodiment includes:
an encapsulating module, configured to receive the original registration request message sent by a new member in the local network, encapsulate the original registration request message and the information indicating the new member into the request message, and send the request message to the GCKS; and
a resolving module, configured to receive the response message returned by the GCKS, obtain the information indicating the new member and the original response message carrying the processing result of request from the response message, and send the original response message to the new member according to the information indicating the new member.

The agent for registering a new member in group key management in this embodiment relays the original registration request sent by the new member to the GCKS, receives the response message returned by the GCKS, relays the response message to the new member, and helps the new member register with the GCKS, thus reducing complicated configuration and implementing automatic registration of the new member.

The agent for registering a new member in group key management in this embodiment may be deployed in every local network that requires the automatic group key management service. The local network may be a multicast network, a broadcast network, or a unicast network, for example, the agent may be deployed in every OSPFv3 multicast network that requires the automatic group key management service.

The information indicating the new member in the foregoing description may be the source IP address of the new member, or the local ID of the new member generated by the agent according to the source IP address of the new member.

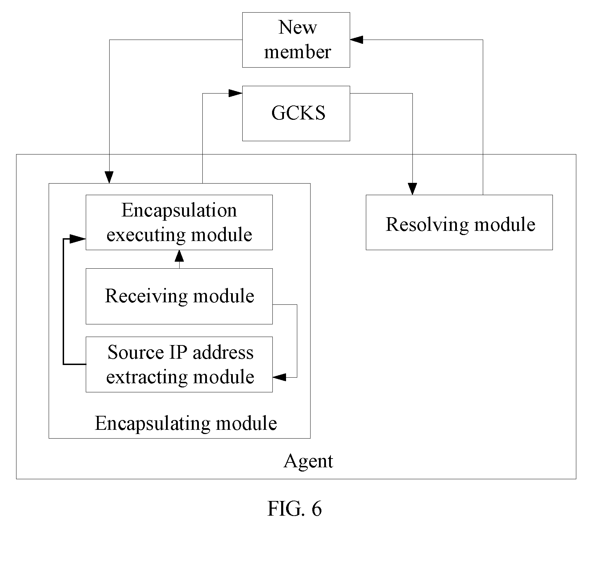

As shown in FIG. 6, when the information indicating the new member is the source IP address of the new member, the encapsulating module in the foregoing agent may include:
a receiving module, configured to receive the original registration request message sent by the new member in the local network, and transmit the original registration request message to an encapsulation executing module and a source IP address extracting module;
the source IP address extracting module, configured to extract the source IP address of the new member from the original registration request message transmitted by the receiving module;
the encapsulation executing module, configured to encapsulate the source IP address of the new member extracted by the source IP address extracting module and the original registration request message transmitted by the receiving module into the request message, and send the request message to the GCKS.

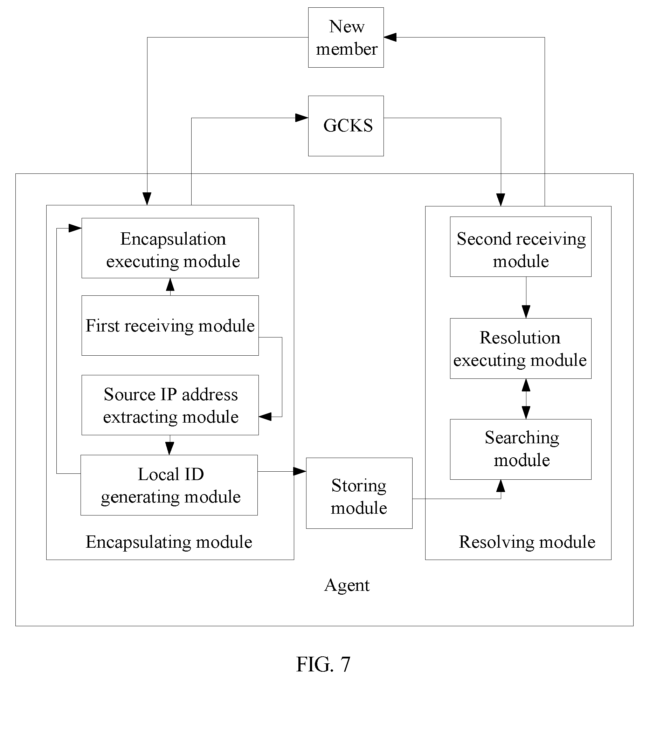

As shown in FIG. 7, when the information indicating the new member is the local ID of the new member generated by the agent according to the source IP address of the new member, a storing module is included in the agent and the encapsulating module in the foregoing agent may include:
a first receiving module, configured to receive the original registration request message sent by the new member in the local network, and transmit the original registration request message to an encapsulation executing module and a source IP address extracting module;
the source IP address extracting module, configured to extract the source IP address of the new member from the original registration request message transmitted by the first receiving module;
the local ID generating module, configured to generate the local ID of the new member corresponding to the source IP address of the new member according to the source IP address extracted by the source IP address extracting module, and store the corresponding relationship between the source IP address and the local ID of the new member into the storing module;
the encapsulation executing module, configured to encapsulate the local ID of the new member generated by the local ID generating module and the original registration request message transmitted by the first receiving module into the request message, and send the request message to the GCKS.

In the embodiment, the storing module is configured to store the corresponding relationship, provided by the local ID generating module, between the source IP address and the local ID of the new member.

When the information indicating the new member is the local ID of the new member generated by the agent according to the source IP address of the new member, the resolving module in the agent may include:
a second receiving module, configured to receive the response message returned by the GCKS, and transmit the response message to a resolution executing module;
a searching module, configured to search the storing module for the source IP address of the new member corresponding to the local ID of the new member according to the local ID of the new member extracted from the response message by the resolution executing module;
the resolution executing module, configured to extract the local ID of the new member and the original response message carrying the processing result of request from the response message transmitted by the second receiving module, and send the extracted original response message to the source IP address of the new member according to the source IP address of the new member found by the searching module.

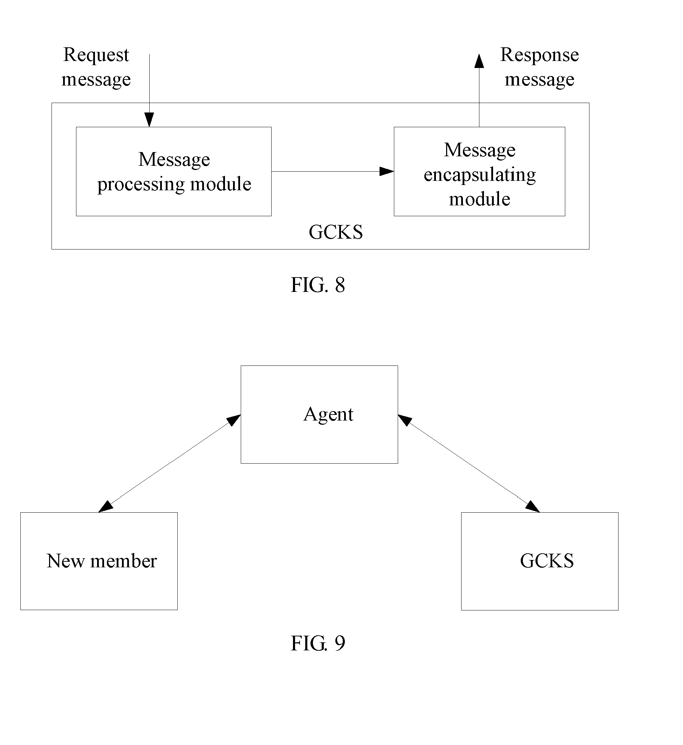

FIG. 8 shows a structure of a GCKS for registering a new member in group key management in an embodiment of the present invention. The GCKS includes:
a message processing module, configured to receive the request message carrying the information indicating the new member and the original registration request message from an agent, extract the information indicating the new member and the original registration request message, process the original registration request message and obtain a processing result of request;
a message encapsulating module, configured to encapsulate the processing result of request obtained by the message processing module into the original response message, encapsulate the information indicating the new member extracted by the message processing module together with the original response message into the response message, and send the response message to the agent.

The GCKS may work together with the agent for registering a new member in group key management in an embodiment of the present invention.

Finally, a system for registering a new member in group key management in an embodiment of the present invention is described below. As shown in FIG. 9, the system includes:
a new member, configured to send an original registration request message to an agent in the local network, and receive an original response message carrying the processing result of request sent by the agent in the local network;
the agent, configured to receive the original registration request message sent by the new member in the local network, encapsulate the original registration request message and an information indicating the new member into the request message, send the request message to a GCKS; receive a response message returned by the GCKS, extract the information indicating the new member and the original response message carrying the processing result of request from the response message, and send the original response message to the new member according to the information indicating the new member. The agent may be deployed on every OSPFv3 multicast network that requires the automatic group key management service;
the GCKS, configured to receive the request message carrying the information indicating the new member and the original registration request message from the agent, extract the information indicating the new member and the original registration request message, process the original registration request message and obtain the processing result of request; encapsulate the processing result of request into the original response message, encapsulate the information indicating the new member and the original response message into the response message, and send the response message to the agent.

The agent in the system for registering a new member in group key management in the embodiments of the present invention may be deployed on a local multicast network, a broadcast network or a unicast network. The deployed agent relays the original registration request sent by the new member to the GCKS, receives the response message returned by the GCKS, relays the response message to the new member, and helps the new member register with the GCKS, thus reducing complicated configuration and implementing automatic registration of the new member.

The agent for registering a new member in group key management, provided by the foregoing embodiments, may be a preferred embodiment of the agent in the foregoing system, and the GCKS for registering a new member in group key management, provided by the foregoing embodiments, may be a preferred embodiment of the GCKS in the foregoing system.

The agent, GCKS and system for registering a new member in group key management may work according to the method for registering a new member in group key management in an embodiment of the present invention.

In the method, apparatus and system for registering a new member in group key management in the embodiments of the present invention, an agent is deployed on the local network. The agent, relays the original request message sent by the new member to the GCKS through the re-encapsulated request message, receives the response message from the GCKS, extracts the original response message carrying a processing result of request from the response message, relays the original response message sent by the GCKS to the new member, and helps the new member register with the GCKS, thus reducing complicated configuration and implementing automatic registration of a new member.

Although the invention has been described through several preferred embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A method for registering a new member in group key management, comprising:
deploying an agent on a local network that requires an automatic group key management service;
receiving, by the agent, an original registration request message sent by a new member in the local network, encapsulating the original registration request message and an information indicating the new member into a request message, and sending the request message to a Group Controller Key Server (GCKS); and
receiving, by the agent, a response message returned by the GCKS, extracting the information indicating the new member and an original response message carrying a processing result of request from the response message, and sending the original response message to the new member according to the information indicating the new member.

2. The method of claim 1, wherein: the information indicating the new member is a source IP address of the new member; and
after receiving, by the agent, the original registration request message and before encapsulating the original registration request message and the information indicating the new member into the request message, the method further comprises:
extracting, by the agent, the source IP address of the new member from the original registration request message.

3. The method of claim 2, wherein:
the information indicating the new member in the response message is the source IP address of the new member; and
sending the original response message to the new member according to the information indicating the new member comprises:
sending, by the agent, the original response message to the source IP address of the new member.

4. The method of claim 1, wherein: the information indicating the new member is a local ID of the new member; and
after receiving, by the agent, the original registration request message and before encapsulating the original registration request message and the information indicating the new member into the request message, the method further comprises:
extracting, by the agent, a source IP address of the new member from the original registration request message, and generating the local ID of the new member corresponding to the source IP address; and
before sending the request message to the GCKS, the method further comprises:
storing a corresponding relationship between the local ID and the source IP address of the new member.

5. The method of claim 4, wherein:
the information indicating the new member in the response message is the local ID of the new member; and sending the original response message to the new member according to the information indicating the new member comprises:
extracting, by the agent, the original response message and the local ID of the new member from the response message, and sending the original response message to the source IP address of the new member corresponding to the local ID of the new member according to the corresponding relationship between the local ID and the source IP address of the new member.

6. The method of claim 1, wherein the agent receives the original registration request message sent by the new member in this way:
intercepting, by the agent, the original registration request message sent by the new member in the local network.

7. An agent for registering a new member in group key management, comprising:
an encapsulating module, configured to receive an original registration request message sent by a new member in a local network, encapsulate the original registration request message and an information indicating the new member into a request message, and send the request message to a Group Controller Key Server (GCKS); and
a resolving module, configured to receive a response message returned by the GCKS, extract the information indicating the new member and an original response message carrying a processing result of request from the response message, and send the original response message to the new member according to the information indicating the new member.

8. The agent of claim 7, wherein: the information indicating the new member is a source IP address of the new member; and the encapsulating module comprises:
a receiving module, configured to receive the original registration request message sent by the new member in the local network, and transmit the original registration request message to an encapsulation executing module and a source IP address extracting module;
the source IP address extracting module, configured to extract the source IP address of the new member from the original registration request message transmitted by the receiving module; and
the encapsulation executing module, configured to encapsulate the source IP address of the new member extracted by the source IP address extracting module and the original registration request message transmitted by the receiving module into the request message, and send the request message to the GCKS.

9. The agent of claim 7, wherein: the information indicating the new member is a local ID of the new member; the encapsulating module comprises:
a first receiving module, configured to receive the original registration request message sent by the new member in the local network, and transmit the original registration request message to an encapsulation executing module and a source IP address extracting module;
the source IP address extracting module, configured to extract a source IP address of the new member from the original registration request message transmitted by the first receiving module;
a local ID generating module, configured to generate the local ID of the new member corresponding to the source IP address of the new member according to the source IP address extracted by the source IP address extracting module, and store a corresponding relationship between the source IP address and the local ID of the new member into a storing module;
an encapsulation executing module, configured to encapsulate the local ID of the new member generated by the local ID generating module and the original registration request message transmitted by the first receiving module into the request message, and send the request message to the GCKS; and the agent further comprises the storing module:
the storing module, configured to store the corresponding relationship, provided by the local ID generating module, between the source IP address and the local ID of the new member.

10. The agent of claim 9, wherein the resolving module comprises:
a second receiving module, configured to receive the response message returned by the GCKS, and transmit the response message to a resolution executing module;
a searching module, configured to search the storing module for the source IP address of the new member corresponding to the local ID of the new member according to the local ID extracted from the response message by the resolution executing module; and
the resolution executing module, configured to extract the local ID of the new member and the original response message carrying the processing result of request from the response message transmitted by the second receiving module, and send the extracted original response message to the source IP address of the new member according to the source IP address of the new member found by the searching module.

11. A Group Controller Key Server (GCKS) for registering a new member in group key management, comprising:
a message processing module, configured to receive a request message carrying an information indicating the new member and an original registration request message from an agent, extract the information indicating the new member and the original registration request message, process the original registration request message and obtain a processing result of request; and
a message encapsulating module, configured to encapsulate the processing result of request obtained by the message processing module into an original response message, encapsulate the information indicating the new member extracted by the message processing module together with the original response message into a response message, and send the response message to the agent.

12. A system for registering a new member in group key management, comprising:
a new member, configured to send an original registration request message to an agent in a local network, and receive an original response message carrying a processing result of request sent by the agent in the local network ;
the agent, configured to receive the original registration request message sent by the new member in the local network, encapsulate the original registration request message and an information indicating the new member into a request message, send the request message to a GCKS; receive a response message returned by the GCKS, extract the information indicating the new member and the original response message carrying the processing result of request from the response message, and send the original response message to the new member according to the information indicating the new member; and
the GCKS, configured to receive the request message carrying the information indicating the new member and the original registration request message from the agent, extract the information indicating the new member and the original registration request message, process the original registration request message and obtain the processing result of request; encapsulate the processing result of request into the original response message, encapsulate the information indicating the new member and the original response message into the response message, and send the response message to the agent.
